# EUROPEAN PATENT APPLICATION

(11) **EP 4 654 751 A1**
(43) Date of publication of application: **26.11.2025**
(21) Application number: 25178198.5
(22) Date of filing: 22.05.2025
(51) Int. Cl.: H05B 47/10, H05B 47/19, H05B 47/175

(54) **SMART DEVICE AND PARAMETER CONFIGURATION SYSTEM**

(30) Priority: 23.05.2024 CN 202410648451
(71) Applicant: Astera Manufacturing Limited, Shenzhen, Guandong 518000 (CN)
(72) Inventor: ERNST, Norbert, Shenzhen, 518000 (CN); CANINS, Simon, 81829 Munich (DE)
(74) Representative: Dr. Gassner & Partner mbB

(57) **Abstract**

The application discloses smart device and a parameter configuration system. The smart device is used for configuring parameters for multiple lighting fixtures and comprises a casing body having an accommodating space, an accommodating part is arranged in the accommodating space and is arranged with one or more accommodating cavities for accommodating the lighting fixtures; and a control module including a control board for controlling the lighting fixtures. The smart device can control the multiple lighting fixtures and perform parameter configuration for the lighting fixtures through the control module concurrently, and particularly can perform address setting for the lighting fixtures simultaneously, so as to solve the problem of prior arts that parameters can only be set individually for each lighting fixture.

## Description

### Field of the Invention:

The present invention generally relates to the technical field of lighting fixtures, in particular to a smart device and a system for configurating parameters of lighting fixtures.

### Background of the Invention:

In contemporary large-scale stage performances, not only are the number and types of lighting fixtures increasing, but the lighting functionality is also becoming more sophisticated and demanding. For example, a medium-sized concert may involve over 1,000 lighting fixtures distributed over the stage. Conventionally, each lighting fixture must be assigned with a unique ID address before installation for individual identification, debugging, and configuration of parameters such as colour temperature and light colour. However, such method of individual configuration is highly time-consuming and presents a significant challenge for on-site setup and debugging.

### Summary of the Invention:

An objective of the present invention is to provide a smart device and a parameter configuration system to solve the above-said problem that parameters can only be set for each lighting fixture individually and independently. The smart device is arranged with a user interface and multiple accommodating cavities enabling the smart device to accommodate multiple lighting fixtures. Through a control module, the smart device may simultaneously control the multiple lighting fixtures. In particular, the smart device may perform parameter configuration on the multiple lighting fixtures, and address setting on the multiple lighting fixtures simultaneously.

In accordance with a first aspect, the present application provides a smart device including:
a casing body having an accommodating space;
an accommodating part arranged in the accommodating space and having one or more accommodating cavities for accommodating one or more lighting fixtures respectively.

Optionally, the smart device further comprises a control module including a control board used for controlling the one or more lighting fixtures.

Optionally, the control module further includes a first communication module; and when the one or more lighting fixtures are arranged in the accommodating part, the first communication module is configured to be in communication connection with the one or more lighting fixtures and the control board is used to control the one or more lighting fixtures through the first communication module.

Optionally, when the one or more lighting fixtures are arranged in the accommodating part, the control module is configured to be in communication connection with a target terminal so as to receive a set of target instructions sent by the target terminal, and the control module is used to configure lighting parameters of the one or more lighting fixtures based on the set of target instructions, so that the one or more lighting fixtures are operated with the target lighting parameters.

Optionally, the smart device further comprises one or more pairs of first transmitter and second transmitter mounted at the accommodating part corresponding to the one or more accommodating cavities respectively; and wherein for each accommodating cavity, a corresponding first transmitter is configured to transmit detection signals in a first direction and a corresponding second transmitter is configured to transmit detection signals in a second direction so as to detect whether the accommodating cavity is occupied by a lighting fixture, wherein the first direction and the second direction are different.

Optionally, the angle formed between the first direction and the second direction is 90°.

Optionally, the accommodating part further includes one or more pairs of first recess and second recess, and each pair of the first recess and the second recess are circumferentially arranged along an opening of a corresponding accommodating cavity and disposed at opposite sides of the accommodating cavity.

Optionally, the control module is further configured to transmit a target control signal for controlling the one or more pairs of first transmitter and second transmitter to transmit the detection signals.

In accordance with a second aspect, the present invention provides a parameter configuration system comprising lighting fixtures and a smart device according to the first aspect, and the lighting fixtures are accommodated in the smart device.

Optionally, the parameter configuration system further comprises a second communication module; when the lighting fixtures are arranged in the smart device, the second communication module is configured to be in communication connection with a target terminal so as to receive a set of target instructions sent by the target terminal; and the set of target instructions is used for configuring the lighting fixtures to work with the target lighting parameters.

Optionally, the parameter configuration system further comprises a connector arranged with a third communication module; when the lighting fixtures are accommodated in the smart device, the third communication module is configured to be in communication connection with a target terminal so as to receive a set of target instructions sent by the target terminal; and the set of target instructions is used for configuring the lighting fixtures to work with the target lighting parameters.

It can be seen that the following advantageous effects are achieved by adopting the embodiments of the present invention.

The smart device provided by the present invention comprises a casing body, an accommodating part and a control module, wherein the casing body is arranged with an accommodating space, an accommodating part arranged in the accommodating space and the accommodating part has at least one accommodating cavity for holding lighting fixture. The control module includes a control board configured to control the lighting fixture. The control board, which features a user interface, is installed on the casing body. The casing body is capable of accommodating multiple lighting fixtures simultaneously, allowing the control module to control and configure parameters, including address assignment, for all the lighting fixtures at the same time, and overcoming the limitations of conventional methods, which only allow for configuring lighting fixtures one by one, thereby significantly reducing the time required for parameter configuration in large-scale events.

### Brief Description of the Drawings:

Embodiments of the invention are described in more details hereinafter with reference to the drawings, in which:
FIG. 1 is a schematic structural diagram of a parameter configuration system according to an embodiment of the present application;
FIG. 2 is a schematic structural diagram of a smart device according to an embodiment of the present application;
FIG. 3 is a schematic structural diagram of a smart device according to another embodiment of the present application;
FIG. 4 is a schematic structural diagram of a parameter configuration system according to another embodiment of the present application;
FIG. 5 is a schematic view of a control board according to an embodiment of the present application;
FIG. 6 is a partial enlarged view of the smart device shown in FIG. 2;
FIG. 7 is a schematic diagram of a lighting fixture according to an embodiment of the present invention;
FIG. 8 is a schematic diagram illustrating connection between a target terminal and a lighting fixture according to an embodiment of the present invention.

### Detailed Description:

In order to enable those skilled in the art to better understand the present application, the technical solutions of the embodiments will be clearly and comprehensively described below with reference to the accompanying drawings. It should be understood that the described embodiments represent only a portion of the embodiments of the present application, rather than all possible embodiments. Any other embodiments that can be conceived by those skilled in the art based on the disclosed embodiments, without involving inventive effort, are intended to fall within the scope of the present application.

The terms "first", "second" and the like, as used in the description, claims, and accompanying drawings, are intended solely to distinguish between different elements and do not imply any specific sequence or chronological order. Furthermore, the terms "comprise", "include", "have" and any variations thereof are intended to denote non-exclusive inclusion. For example, a process, method, system, article, or apparatus that comprises a list of steps or elements is not limited to only those explicitly listed, but may also include other steps or elements that are not listed or that are inherent to such process, method, system, article, or apparatus.

Reference herein to "an embodiment" means that a particular feature, structure, or characteristic described in connection with the embodiment may be included in at least one embodiment of the present application. The appearances of such phrases in various places throughout the specification are not necessarily all referring to the same embodiment, and separate or alternative embodiments are not mutually exclusive. Those skilled in the art will recognize, both explicitly and implicitly, that the embodiments described herein may be combined with one another in various ways without departing from the scope of the present application.

Some terms involved in the present application will be explained below:
The digital multiplexing (Digital Multiplex, DMX) protocol is a communication protocol for controlling stage lighting and special effect equipment, and is a widely used digital light control data transmission protocol. That is, each controlled light unit can realize digital light control as long as the requirements of the protocol are met. The control signals of DMX-512 or DMX-512A versions of DMX are in units of "frames", and can drive 512 light loops at most per frame of data, which is also called 512 DMX channels in the industry. The effective DMX value for each DMX channel is between 0-255, a feature that allows users to achieve linear dimming of the light circuit by adjusting the DMX dimming value.

The lighting configuration parameters refer to various technical parameters and performance indexes for setting and adjusting the lighting fixtures so as to meet specific lighting requirements and use environments. These parameters may include brightness, colour temperature, colour consistency, power, efficiency, illumination angle, operating temperature range, etc. The parameter configuration of the lighting fixture may be realized by means of hardware adjustment, software programming or a combination of both.

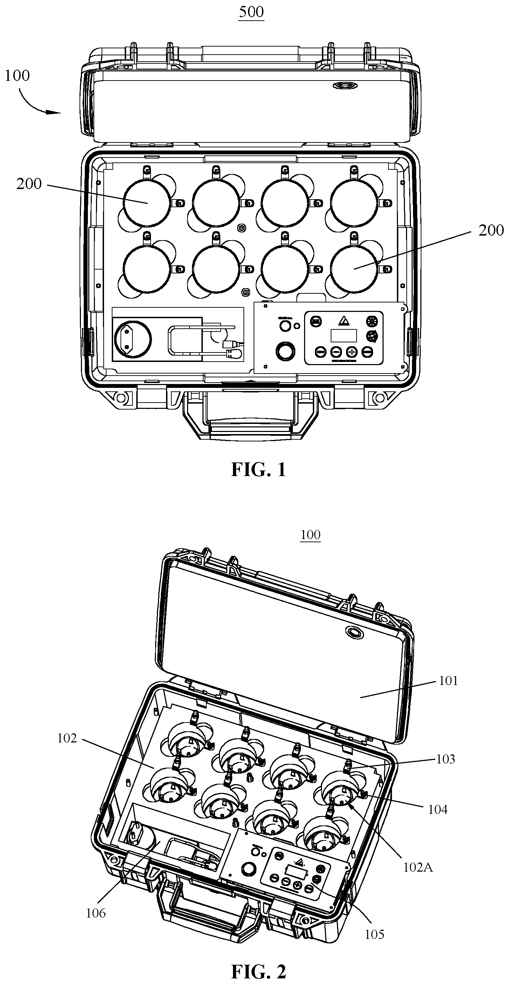

Please refer to FIGS. 1 and 2. FIG. 1 is a schematic structural diagram of a parameter configuration system provided in one embodiment of the present application, and FIG. 2 is a schematic structural diagram of smart device provided in one embodiment of the present application. As shown in FIG. 1, the parameter configuration system 500 may include a smart device 100 and one or more lighting fixtures 200.

As shown in FIG. 2, the smart device 100 is used to configure parameters for the lighting fixtures 200. The smart device 100 includes: a casing body 101 having an accommodating space; and an accommodating part 102 arranged within the accommodating space. The accommodating part 102 includes one or more accommodating cavities 102A for holding one or more lighting fixtures 200 respectively; and one or more pairs of first transmitter 103 and second transmitter 104 mounted at the accommodating part 102. Each pair of first transmitter 103 and second transmitter 104 corresponds to an accommodating cavity 102A. For each accommodating cavity 102A, a corresponding first transmitter 103 is configured to transmit a detection signal in a first direction and a corresponding second transmitter 104 is configured to transmit a second detection signal in a second direction for detecting whether a lighting fixture 200 is placed in the accommodating cavity 102A, wherein the first direction and the second direction are different.

In the embodiment of the present application, the first transmitter 103 and the second transmitter 104 may be at least one of the following: infrared transmitter, ultrasonic transmitter, wireless signal transmitter, and the like, which are not limited herein.

In a specific embodiment, each first transmitters 103 and each second transmitter 104 may be infrared emitters installed in the accommodating part 102. The first transmitter 103 and the second transmitter 104 may periodically or regularly emit detection signals, and the emitted detection signals will be propagated in a corresponding accommodating cavity 102A in the accommodating part 102. In this way, when a lighting fixture 200 is placed in the accommodating cavity 102A, the emitted detection signal will reach the lighting fixture 200, and the smart device 100 can determine that the lighting fixture 200 has been placed in the accommodating cavity 102A, that is, the position of the lighting fixture 200 is detected. The number of accommodating cavities 102A may be, but not limited to, 1, 2, 3, 5, 7, 8, 10, etc., and each accommodating cavity 102A is only used to accommodate one lighting fixture 200. When the smart device 100 is used to configure the parameters of the lighting fixtures 200, all the accommodating cavities 102A may be occupied with lighting fixtures 200, or only some of the accommodating cavities 102A may be occupied with lighting fixtures 200. When there are multiple accommodating cavities 102A, each accommodating cavity 102A is arranged with a first transmitter 103 and a second transmitter 104.

It should be explained that the first transmitter 103 and the second transmitter 104 can be transmitters of the same type or transmitters of different types; the first transmitter 103 and the second transmitter 104 can be embedded inside the accommodating part 102 or disposed outside the accommodating part 102 (as shown in FIG. 2).

In some embodiments, the accommodating part 102 may be made of a flexible material, or the smart device 100 may further include one or more flexible members made of flexible material, and each flexible member is disposed in a corresponding accommodating cavity 102A and connected to a side wall of the corresponding accommodating cavity 102A.

The flexible material may be at least one of, but not limited to: foam, sponge and gel material.

In a specific embodiment, the flexible material mainly plays a role of buffering and provides a soft contact surface. On one hand, when the lighting fixtures 200 are impacted or vibrated, part of energy can be absorbed to reduce influence of external vibration on the lighting fixtures 200 and keep the lighting fixtures stable. On the other hand, a soft contact surface can be provided, so that scrabbing between the lighting fixtures 200 and other hard components can be avoided, the pressure born by the lighting fixtures 200 are reduced, and the service life of the lighting fixtures 200 are prolonged.

In some embodiments, the first direction and the second direction form an angle of 90°. In other words, the first transmitter 103 and the second transmitter 104 are orthogonally arranged. With such arrangement, the emission directions of the detection signals of the two transmitters form an angle of 90° such that the coverage range of the detection signals is maximized, the detection blind area is reduced, and the position of each lighting fixture 200 are ensured to be effectively detected. As a result, the detection comprehensiveness is improved, enabling a more accurate determination of whether the lighting fixture 200 is in the accommodating cavity 102A.

In other embodiments, the angle formed by the first direction and the second direction may be other than 90°, such as 30°, 41°, 55°, 60°, 79°, 86° or any other suitable angles.

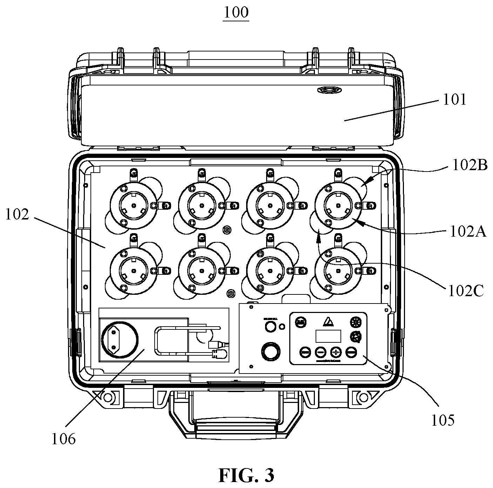

Please refer to FIG. 3 for some embodiments. FIG. 3 is a schematic structural diagram of a smart device according to another embodiment of the present application. As shown, each of the accommodating cavities 102A is further arranged with a first recess 102B and a second recess 102C. The first recess 102B and the second recess 102C are arranged circumferentially along an opening of the accommodating cavity 102A and disposed opposite to each other. That is, the first recess 102B and the second recess 102C are disposed at opposite sides of the accommodating cavity 102A. It can be appreciated that when the user is taking/placing lighting fixtures 200 from/in the accommodating cavity 102A, the first recess 102B and the second recess 102C can provide space for two fingers of the user to access the accommodating cavity 102A, that is, the first recess 102B and the second recess 102C are used as spaces for finger positions, thereby facilitating the user to perform the operation of taking and placing the lighting fixture 200.

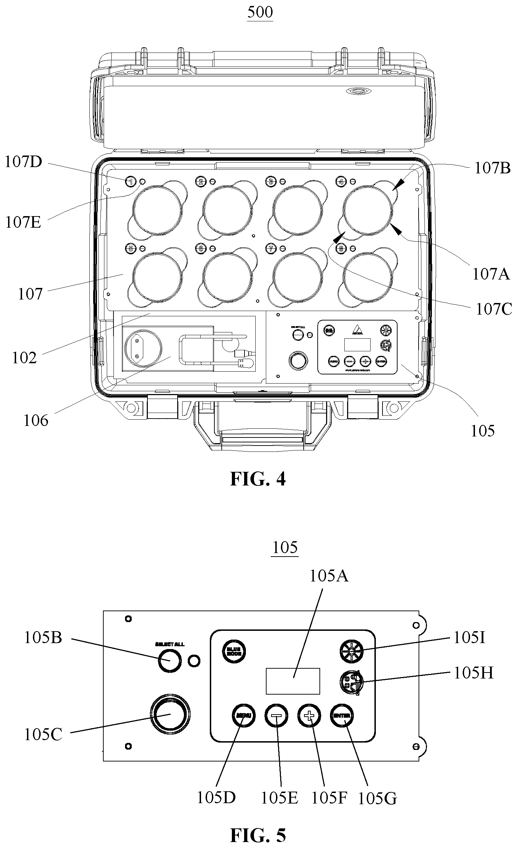

Please refer to FIG. 4 for some embodiments. FIG. 4 is a schematic structural diagram of a parameter configuration system according to another embodiment of the present application. As shown, the smart device 100 further includes an indication board 107 disposed on one side of the accommodating part 102. The indication board 107 is arranged with one or more through holes. Each through hole includes a middle hole 107A, a first side hole 107B, and a second side hole 107C. The middle hole 107A is communicable with the first side hole 107B and the second side hole 107C. The middle hole 107A is aligned to a corresponding accommodating cavity 102A, the first side hole 107B is aligned to a corresponding first recess 102B, and the second side hole 107C is aligned to a corresponding second recess 102C. When a lighting fixture 200 is placed in the accommodating cavity 102A, the lighting fixture 200 is inserted into the middle hole 107A. When the user is taking and placing the lighting fixture 200, the first side hole 107B and the second side hole 107C are used for accommodating two fingers of the user, that is, the first side hole 107B and the second side hole 107C are used as spaces for finger positions so that the user can conveniently take and place the lighting fixture 200.

In some embodiments, the indication board 107 further includes one or more flag bits 107D and one or more indicator lights 107E, disposed adjacent to the one or more through holes respectively. Each flag bit 107D plays a role of a flag, and a user can determine the position of a corresponding lighting fixture 200 according to the flag bit 107D, so that the user can locate the lighting fixture 200 quickly, and each indicator light 107E can be used for indicating whether a corresponding accommodating cavity 102A is accommodating a lighting fixture 200. Specifically, when the smart device 100 detects that a lighting fixture 200 is inserted in a accommodating cavity 102A, the corresponding indicator light 107E may emit light of a first preset colour (for example, blue), and the indicator light 107E is in a flashing state until the lighting fixture 200 is successfully connected to the smart device 100, and the indicator light 107E emits light of a second preset colour (for example, green) and is in a stable state without flashing, which indicates that the lighting fixture 200 is in a stable state in the smart device 100.

It should be explained that the first preset colour and the second preset colour may be the same colour or different colours, and each of the accommodating cavities 102A is correspondingly provided with a flag bit 107D and an indicator lighting fixture 107E.

**In** some embodiments, the smart device 100 further comprises a control module configured to transmit a target control signal for controlling the first transmitter 103 and the second transmitter 104 to transmit a detection signal respectively. That is, the first transmitter 103 and the second transmitter 104 are controlled by the same signal.

**In** a specific embodiment, the target control signal may be, but is not limited to, a voltage signal. When the transmitters are required to transmit the detection signals, the control module sends a target control signal to the first transmitter 103 and the second transmitter 104, and after the two transmitters receive the target control signal, corresponding operations are performed. For example, the target control signal may be a high-level signal, when the first transmitter 103 and the second transmitter 104 receive the high-level signal, the first transmitter 103 and the second transmitter 104 transmit detection signals. For example, the target control signal may be a low-level signal, and when the first transmitter 103 and the second transmitter 104 receive the low-level signal, the first transmitter 103 and the second transmitter 104 do not transmit any detection signals.

It should be noted that the method for controlling the transmitters described above is only one possible method, and in practical implementation, other methods may be used to control the transmitters.

In some embodiments, the smart device 100 further comprises a power supply module 106 (as shown in FIG. 4), the power supply module 106 is configured to supply power to all of the lighting fixtures 200.

In a specific embodiment, the power supply module 106 may be an energy storage battery or a rechargeable battery, and the power supply module 106 may be connected to the lighting fixtures 200 through connection lines, so that all the lighting fixtures 200 placed in the smart device 100 are powered through the power supply module 106. Therefore, it is not required to provide each lighting fixture 200 with a battery, thereby providing a condition for configuring parameters for all the lighting fixtures 200 at the same time.

In some embodiments, the smart device 100 further includes a control module, where the control module includes a control board 105 (as shown in FIG. 5) and a first communication module. The first communication module is used to make a communication connection with each of the lighting fixtures 200 after the lighting fixture 200 is disposed in the accommodating part 102, and the control board 105 is used to control the lighting fixture 200 through the first communication module.

In the embodiments of the present invention, the first communication module may include at least one of: WiFi module, Bluetooth module, UHF high-frequency module and the like, which are not limited herein. Each of the lighting fixtures 200 comprises a second communication module, which may comprise at least one of: WiFi module, Bluetooth module, infrared module, and UHF high frequency module. At least one button may be provided on the control board 105, and each button corresponds to a different function.

In a specific embodiment, taking that the first communication module includes a WiFi module as an example, when a lighting fixture 200 is disposed at the accommodating part 102, the WiFi module in the first communication module is in communication connection with the WiFi module of the lighting fixture 200, and at this time, the smart device 100 and the lighting fixture 200 communicate through WiFi and perform functions corresponding to buttons on the control board 105. For example, when a button on the control board 105 is pressed, the control board 105 sends an instruction. The instruction is sent to the WiFi module of the lighting fixture 200 through the WiFi module in the first communication module, and after receiving the instruction, the lighting fixture 200 executes a function corresponding to the button.

In some embodiments, the lighting fixture 200 may include a target receiver, which may be, but is not limited to, an infrared receiver. The target receiver may receive the detection signals transmitted by a corresponding first transmitter 103 and a corresponding second transmitter 104.

The specific process of detecting whether a lighting fixture 200 is disposed in the accommodating cavity 102A by the first transmitter 103 and the second transmitter 104 may include: first, a first detection signal is transmitted by the first transmitter 103 in a first direction, and a second detection signal is transmitted by the second transmitter 104 in a second direction, wherein when either one of the two detection signals is received by a target receiver in the lighting fixture 200, it indicates that the lighting fixture 200 has been placed in the accommodating cavity 102A. In this process, the second communication module in the lighting fixture 200 may be used to communicate with the first communication module in the smart device 100, so as to indicate that the lighting fixture 200 is already located in the accommodating cavity 102A. For example, when the target receiver receives the detection signal sent by the first transmitter 103 or the second transmitter 104, the WiFi module in the second communication module sends a specific signal (for example, a signal containing an identifier of the lighting fixture 200) to the WiFi module in the first communication module, and the control board 105 of the smart device 100 may determine that the lighting fixture 200 is already located in the accommodating cavity 102A based on the specific signal.

In some embodiments, the control board 105 may include a CPU, through which a wireless access point (AP), such as Wifi AP, is turned on, after the smart device 100 determines that the lighting fixture 200 is disposed in the accommodating cavity 102A, a preset infrared code (similar to an infrared remote controller) may be sent to the lighting fixture 200 through the control module. The preset infrared code may include information required for accessing the Wifi AP, for example, a Wifi AP name, an access password, etc.. Then, the target receiver in the lighting fixture 200 may receive the preset infrared code, a Wifi module in the lighting fixture 200 may be connected to the Wifi AP according to the information in the preset infrared code, and then, the lighting fixture 200 may perform a function corresponding to a pressed button on the control board 105 through Wifi communication.

It should be noted that, the target receiver may be embedded in the lighting fixture 200 or may be exposed outside the lighting fixture 200. Among the accommodating cavities 102A, each accommodating cavity corresponds to one first transmitter 103 and one second transmitter 104. Moreover, the detection signals emitted by the corresponding first transmitter 103 and second transmitter 104 can only propagate in the accommodating cavity, so as to prevent interference to other accommodating cavities.

Further, the smart device 100 includes a casing body 101, an accommodating part 102, a control board 105, a power supply module 106, and a plurality of lighting fixtures 200, wherein each of the lighting fixtures 200 is disposed in a corresponding accommodating cavity 102A in the accommodation part 102, and each of the accommodating cavities 102A corresponds to one of the lighting fixtures 200.

Please refer to FIG. 5 for some embodiments. FIG. 5 is a schematic diagram of a control board according to an embodiment of the present invention. As shown, the control panel 105 may include a display panel 105A, a detection button 105B, a power-on button 105C, a menu button 105D, a decrement button 105E, an increment button 105F, a confirmation button 105G, a colour conversion button 105H, and a mode pairing button 105I.

In a specific embodiment, the display panel 105A is used for displaying the current operation state of the control panel 105, the power-on button 105C is used for turning-on the power supply module 106 to supply power to the lighting fixtures 200, the detection button 105B is used for detecting whether the connection between the lighting fixtures 200 and the smart device 100 is stable, the menu button 105D is used for displaying a menu, the mode pairing button 105I is used for starting pairing (for example, Bluetooth pairing), and the colour conversion button 105H is used for converting lighting colour of the lighting fixtures 200.

In some embodiments, after the colour conversion button 105H is pressed, the lighting fixtures in the smart device 100 perform colour conversion sequentially according to numerical order of the corresponding flag bits. For example, the lighting fixtures with smaller flag bits change colours earlier. When there are 8 lighting fixtures in the smart device 100, the flag bits corresponding to the 8 lighting fixtures are numbers 1 to 8 respectively. The initial colour of the lighting fixtures may be bright blue, then after the colour conversion button is pressed, the colour of the lighting fixture with the flag bit of 1 may be changed to orange firstly, then the colour of the lighting fixture with the flag bit of 2 is changed to orange, so on sequentially until all lighting fixtures are changed to orange, and the conversion is ended.

In some embodiments, after the menu button 105D is pressed, a menu option is displayed on the display panel 105A, where the menu option may include at least one of the following: a lighting fixture management option, a brightness adjustment option, a timing setting option, a colour switching option, a power information option, etc., which are not limited herein,

The lighting fixture management options are used for managing lighting fixtures, clicking the lighting fixtures management options can enter a lighting fixture management page, the lighting fixture management page can comprise the number of lighting fixtures, lighting fixture flag bit information, lighting fixture operation states and the like. A user can view or adjust lighting fixture information here to conveniently conduct classification management and control on different lighting fixtures, the brightness adjustment options are used for adjusting the brightness of each lighting fixture, the brightness of the lighting fixtures can be increased or decreased through the increment button 105F and the decrement button 105E, and other feasible operation modes are not listed here.

In some embodiments, when the smart device 100 is just started up, a start-up test may be performed on the smart device. For example, when a button is pressed, a corresponding page appears on the display panel 105A. The user may observe the displayed content of the display panel 105A to determine whether the smart device 100 can operate normally. If there is no display or an error message appears, it means that the start-up test is failed. In addition, when the smart device is powered on, each time when a button is pressed, the display panel 105A may be configured to light up. If the button is released for 20 seconds, the display panel 105A will dim out and enter a screen saver mode. The user can observe whether there are white spots or distorted screens on the screen. If white spots or distorted screens are found, it means that the display panel 105A may be damaged.

It should be explained that, after the colour conversion button 105H is pressed, the colour to which the lighting fixtures are changed may be preset in advance or set manually.

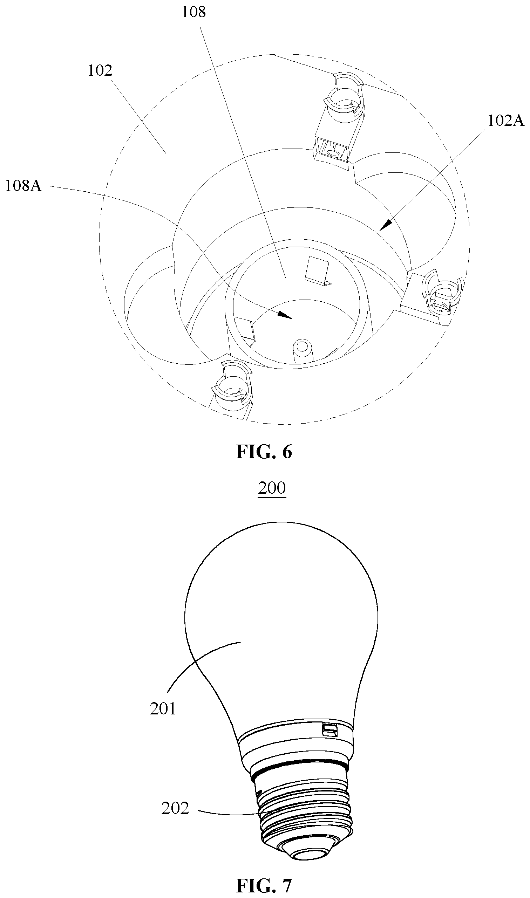

FIG. 6 is a partial enlarged view of the smart device shown in FIG. 2, and FIG. 7 is a schematic diagram of a lighting fixture according to an embodiment of the present invention. Referring to FIGS. 6 and 7, the smart device 100 further includes one or more fixing members 108. Each fixing member 108 is disposed in an accommodating cavity 102A. When a lighting fixture 200 is placed in the accommodating cavity 102A, the lighting fixture 200 is connected with the fixing member 108 so that the lighting fixture 200 is stable and does not shake. Moreover, the fixing member 108 is electrically connected to the power supply module 106, and when the lighting fixture 200 is connected to the fixing member 108, the lighting fixture 200 and the fixing member 108 also form an electrical connection relationship so that the power supply module 106 supplies power to the lighting fixture 200. The lighting fixture 200 includes a light emitting portion 201 and a connecting portion 202, wherein the light emitting portion 201 is used for emitting light, and the connecting portion 202 is used for connecting to the fixing member 108. The fixing member 108 is arranged with a receiving cavity 108A, and the receiving cavity 108A is configured to receive the connecting portion 202 of the lighting fixture 200, that is, when the lighting fixture 200 is placed in the accommodating cavity 102A, the connecting portion 202 of the lighting fixture 200 are located in the receiving cavity 108A, so as to form a connection relationship with the fixing member 108. It should be noted that the connection means of the connecting portion 202 and the fixing member 108 may be, but not limited to, magnetic connection, threaded connection, etc. The magnetic connection refers to that the connecting portion 202 and the fixing member 108 are both provided with a magnetic member (such as a magnet or an electromagnet) capable of generating a magnetic field, and the connecting portion 202 and the fixing member 108 are magnetically attracted together through the magnetic members. The threaded connection refers to that the connecting portion 202 is arranged with external threads, the receiving cavity 108A of the fixing member 108 is arranged with internal threads, and the connecting portion 202 and the fixing member 108 can be screwed together through the external threads and the internal threads. Of course, there are other possible embodiments, which are not exemplified herein.

Referring to FIG. 3, an embodiment of the present application provides a smart device 100. The smart device 100 is configured to supply power to lighting fixtures 200, and the smart device 100 includes a casing body 101, an accommodating part 102, a power supply module 106, and a control module. Wherein, the casing body 101 is arranged with an accommodating space. The accommodating part 102 is disposed in the accommodating space, and the accommodating part 102 is arranged with at least one accommodating cavities 102A. The accommodating cavities 102A are used for accommodating the lighting fixtures 200. The power supply module 106 is configured to supply power to the lighting fixtures 200. The control module comprises a control board 105 used for controlling the lighting fixtures 200. Further description will be provided below.

In some embodiments, the smart device 100 further includes a control module. When the lighting fixture 200 is disposed in the accommodating part, the control module is configured to be in communication with a target terminal to receive a set of target instructions sent by the target terminal, and the control module is further used to configure parameters of the lighting fixtures 200 according to the set of target instructions, so that the lighting fixture 200 is operated with the target lighting parameters.

In the embodiments of the present invention, the control module may comprise a first communication module including a Bluetooth module and a UHF high-frequency module. The target terminal may be one of: mobile phone, tablet, computer, and the like, which is not limited herein. The set of target instructions is a set of instructions for controlling parameters of the lighting fixtures 200, and specifically, the set of target instructions may include at least one of: brightness instruction, colour instruction, frequency instruction, address instruction, and the like, which is not limited herein.

In a specific embodiment, after the smart device 100 detects that the lighting fixtures 200 are disposed in the accommodating part, the control module may be configured to be in communication connection with a target terminal to receive a set of target instructions sent by the target terminal. Specifically, the control module may pair with the target terminal through a Bluetooth module in a first communication module, and if the pairing is successful, the control module may communicate with the target terminal. And then the target terminal may send a set of target instructions to the control module through the Bluetooth module, and the control module may further configure target lighting parameters for the lighting fixtures 200 according to the set of target instructions, so that the lighting fixtures 200 may work with the target lighting parameters. Specifically, the communication connection with the lighting fixtures 200 may be performed through a UHF high frequency module in the first communication module, so that the set of target instructions is transmitted to the lighting fixtures 200 through the UHF high frequency module, and parameters of the lighting fixtures 200 may be adjusted to the target lighting parameters so that the lighting fixtures 200 may be operated with the target lighting parameters. The set of target instructions may be preset in advance or set by a user.

In some embodiments, the target terminal is a tablet installed with a lighting control system APP. The tablet is connected to the smart device 100 through Bluetooth, and the UHF high-frequency module of the smart device 100 communicates with multiple lighting fixtures 200, so that the lighting control system APP of the mobile phone can control the multiple lighting fixtures 200 simultaneously, so that the lighting fixtures 200 work with the target lighting parameters, wherein the smart device 100 serves as a relay controller. The target lighting parameters are lighting parameters corresponding to the set of target instructions.

The embodiments of the present invention have the following beneficial effects:
The smart device 100 comprises a casing body 101having an accommodating space, the accommodating part 102 is arranged in the accommodating space. The accommodating part 102 is arranged with accommodating cavities 102A for accommodating lighting fixture 200. The smart device 100 further comprises pairs of first transmitter 103 and second transmitter 104 arranged in the accommodating part 102. Each pair of first transmitter 103 and second transmitter 104 corresponds to an accommodating cavity. For each accommodating cavity, the corresponding first transmitter 103 is used for emitting detection signals in a first direction, the corresponding second transmitter 104 is used for emitting detection signals in a second direction so as to detect whether a lighting fixture 200 is placed in the accommodating cavity 102A. The detection range for the lighting fixture 200 is increased through arranging the first transmitter 103 and the second transmitter 104 to emit detection signals in two different directions, therefore the problem of misestimation or omission that usually occur in single-direction detection can be effectively avoided. In addition, through signal coverage in the two directions, detection dead zones possibly existing in the accommodating cavity 102A can be eliminated, any position of the lighting fixture 200 can be accurately detected, and the position detection accuracy of the lighting fixture 200 is improved accordingly.

The smart device provided by the application is arranged with the power supply module which can supply power for multiple lighting fixtures positioned in the accommodating part simultaneously, so that the parameter configuration system can concurrently perform parameter configuration for multiple lighting fixtures, the problem that only one lighting fixture can be subjected to parameter configuration at the same time is solved, and the efficiency of setting the lighting fixtures in large-scale lighting activities is improved. Meanwhile, the smart device is arranged with a control module and a control panel which is easy to operate, so that a user can rapidly operate the smart device. The smart device can communicate with the lighting fixtures, and meanwhile provide a smart operation module for the parameter configuration system.

In one embodiment, the smart device may not be provided with a power supply module, and the smart device includes a casing body 101, where the casing body 101 is arranged with an accommodating space, and an accommodation part 102 disposed in the accommodating space. The accommodation part 102 is arranged with one or more accommodating cavities 102A, each accommodating cavity 102A is used for accommodating a lighting fixture 200. Each lighting fixture is arranged with a power supply. A first transmitter 103 of the smart device is used for transmitting a detection signal in a first direction, and a second transmitter 104 is used for transmitting a detection signal in a second direction, so as to detect whether the lighting fixture 200 is disposed in the accommodating cavity 102A.

In addition, in the embodiments of the present invention, through the set of target instructions transmitted from the target terminal, the smart device 100 adjusts the lighting parameters of the lighting fixtures 200 according to the set of target instructions. The number of the lighting fixtures 200 are one or more, therefore the purpose of configuring lighting parameters of the lighting fixtures 200 at the same time is achieved. On one hand, time and energy are saved, and the efficiency of configuring the lighting fixtures 200 are improved. On the other hand, the lighting parameters of the lighting fixtures 200 are configured simultaneously through the set of target instructions, so that the parameter settings of all the lighting fixtures 200 are ensured to be consistent, accurate control of the lighting fixtures 200 are achieved, and the integral coordination effect of the lighting fixtures 200 are improved, thereby achieving ideal lighting effect.

Referring to FIG. 4, the parameter configuration system 500 includes lighting fixtures 200 and any of the smart devices 100 described in the above embodiments, where the lighting fixtures 200 are accommodated in the smart device 100.

In some embodiments, each lighting fixture 200 includes a second communication module. When the lighting fixture 200 is disposed in the accommodating cavity 102A of the smart device 100, the second communication module is configured to perform communication connection with a target terminal, so as to receive a set of target instructions sent by the target terminal, where the set of target instructions is configured to enable the lighting fixture 200 to operate with target lighting parameters.

In the embodiment of the present invention, the second communication module may be at least one of: a WiFi module, a Bluetooth module, a UHF high-frequency module, and the like, which is not limited herein.

In a specific embodiment, the lighting fixtures 200 may include bulbs respectively. One of the bulbs may be selected as a target main bulb, the target main bulb may be preset in advance or manually selected. Then, the target terminal is in communication connection with a second communication module of the target main bulb. Specifically, the second communication module may include a Bluetooth module and a UHF high frequency module, the target terminal may be paired with the second communication module through Bluetooth, and if the pairing is successful, the target terminal may send a set of target instructions to the target main bulb, and the target main bulb sends the set of target instructions to other bulbs. Specifically, communication connection with other bulbs may be performed through the UHF high frequency module of the target main lighting fixture, so that the operating frequency of the UHF high frequency module of the target main bulb may be matched with the receiving frequencies of the other bulbs, so that the set of target instructions is sent to the other bulbs, and after the other bulbs receive the set of target instructions, parameter configuration is performed according to the set of target instructions, lighting parameters of each bulb may be adjusted to the target lighting parameters corresponding to the set of target instructions, so that the lighting fixtures 200 can operate with the target lighting parameters.

For example, the target terminal may be a mobile phone, in which the lighting control system APP may be installed, and the bulbs may be directly controlled by the APP on the mobile phone. The specific steps may be that the mobile phone performs communication connection with one of the multiple bulbs through Bluetooth, then the bulb connected with the mobile phone is used as a main bulb, and the APP may send the set of target instructions to the main bulb through Bluetooth, so as to directly control the main bulb, that is, the APP may directly adjust the lighting parameters of the main bulb.

In addition, when the APP needs to control multiple bulbs except the main bulb, the main bulb can act as a relay controller, and then the UHF high-frequency module of the main bulb is in communication with the other bulbs, that is, the APP is in indirect communication with the other bulbs through the main bulb, so that the mobile phone APP can control multiple bulbs simultaneously, so that the lighting fixtures 200 may work with the target lighting parameters. The target lighting parameters are the lighting parameters corresponding to the set of target instructions.

In some embodiments, the parameter configuration system 500 further includes a connector having a third communication module, where the third communication module is configured to be in communication connection with a target terminal when the lighting fixtures 200 are disposed in the accommodating cavities 102A of the smart device 100, so as to receive a set of target instructions sent by the target terminal, where the set of target instructions is configured to enable the lighting fixtures to operate with target lighting parameters.

In the embodiments of the present invention, the third communication module may include at least one of: Bluetooth module, wireless DMX transmitting module, CRMX module, UHF high-frequency module, 2.4GWiFi module, and the like, which are not limited herein.

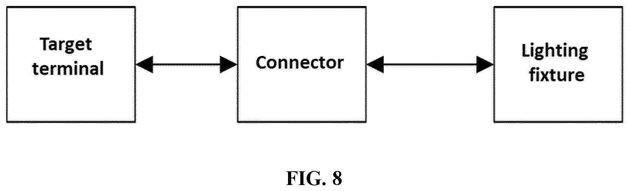

Please refer to FIG. 8 for a specific embodiment. FIG. 8 is a schematic diagram of connection between a target terminal and a lighting fixture in accordance with an embodiment of the present application. As shown, the target terminal is connected to a connector, and the connector is connected to the lighting fixture, so as to establish communication between the target terminal and the lighting fixture. The connector includes a third communication module. The third communication module may include a Bluetooth module, a UHF high-frequency module, and a wireless DMX transmitting module. The target terminal may establish communication connection with the connector through Bluetooth, then use the connector as a relay controller, communicate with the lighting fixtures through the UHF high-frequency module of the connector. And then the target terminal may send a set of target instructions to the connector, and the connector controls the wireless DMX transmitting module to send a DMX signal to the lighting fixtures according to the set of target instructions, so as to adjust the lighting parameters of the lighting fixtures to the target lighting parameters, so that the lighting fixtures operate with the target lighting parameters.

The wireless DMX transmitting module is used for generating a DMX control signal based on a DMX protocol, and controlling lighting parameters of the lighting fixtures through the DMX control signal.

For example, the target terminal may be a mobile phone, in which a lighting control system APP is installed. The APP is directly connected with the connector (also referred to as a lighting connector) through Bluetooth such that the lighting connector can act as a relay controller. The APP may send a set of target instructions to the lighting connector, then the lighting connector generates a corresponding control signal according to the set of target instructions, the control signal may be used to adjust lighting parameters of multiple lighting fixtures, and the UHF high frequency module in the lighting connector communicates with the lighting fixtures to send the control signal to the lighting fixtures, so that the mobile phone APP may control parameters of the lighting fixtures at the same time, so that the lighting fixtures operate with the target lighting parameters. The target lighting parameters are lighting parameters corresponding to the set of target instructions.

In some embodiments, the step of the connector controlling the wireless DMX transmitting module to send the DMX control signal to the lighting fixtures according to the set of target instructions may include:
performing address configuration on the lighting fixtures through the target terminal to obtain target addresses for the lighting fixtures respectively;
formulating, by the target terminal, the set of target instructions for the lighting fixtures based on the target addresses;
sending the target addresses and the set of target instructions to the connector through the target terminal, and generating corresponding DMX control signals by the wireless DMX transmitting module in the connector based on the target addresses and the set of target instructions; and
sending the DMX control signal to the lighting fixtures through the connector.

In a specific embodiment, the target terminal may include a target application that supports configuration and control of lighting fixtures, and the user may configure the address for the lighting fixture in the target application. As an example, it is assumed that the above-mentioned lighting fixtures includes multiple bulbs. As mentioned above, each bulb corresponds to a flag bit. Then, the flag bit of the bulb can be directly used as the address of the bulb. For example, the address of the bulb with a flag bit of 1 can also be set to 1, and so on to obtain the target addresses for other bulbs. Alternatively, an address table can be pre-stored in the above-mentioned target application. Then, according to the flag bit of the bulb, an address is selected from the address table as the address of the corresponding bulb. One flag bit corresponds to one address, that is, a mapping relationship between the flag bit of the bulb and the address in the address table is established, thereby obtaining the above-mentioned target addresses. Then, the target terminal may also set the control instructions of the above-mentioned lighting fixture on the target application. One bulb may correspond to one control instruction. The control instruction contains the address information of the lighting fixture to obtain the set of target instructions. Then, the target terminal may send the target addresses and the set of target instructions to the connector via Bluetooth. The wireless DMX transmitting module in the connector generates a corresponding DMX control signal according to the target addresses and the set of target instructions. Specifically, the wireless DMX transmitting module first parses the set of target instructions to determine the specific requirements for the lighting parameters of the lighting fixtures, and obtains the required lighting parameters, such as lighting colour, lighting brightness and other information. Then, the corresponding DMX control signal is generated according to the target addresses and the required lighting fixture parameters. Finally, the DMX control signal can be sent to the lighting fixtures through the third communication module in the connector.

It should be explained that, when all the lighting fixtures are placed in the smart device, the lighting fixtures will emit the first preset light (for example, blue light). Then, the addresses of all the lighting fixtures are configured. After the address of each lighting fixture is configured, the light emitted by the lighting fixture will be converted from the first preset light to the second preset light (for example, orange) to indicate that the address configuration of the lighting fixture is completed. If the light of the lighting fixture does not change, it means that there is a problem in the address configuration process of the lighting fixture, which may be a configuration error or no configuration, then it needs to be reconfigured or manually processed.

It should be noted that, for simplicity of description, the foregoing method embodiments are all described as a series of acts, but it should be understood by those skilled in the art that the present application is not limited by the order of acts described, as some steps may be performed in other orders or concurrently in accordance with the present application. Further, those skilled in the art will also appreciate that the embodiments described in the specification are all preferred embodiments, and that the acts and modules referred to are not necessarily required for the present application.

In the foregoing embodiments, the descriptions of the embodiments are emphasized, and for parts of one embodiment that are not described in details, reference may be made to related descriptions of other embodiments.

In several embodiments provided in this application, it should be understood that the disclosed device can be implemented in other ways. For example, the device embodiments described above are merely illustrative. For example, the division of the above units is merely a logical function division. There may be other division methods in actual implementation. For example, multiple units or components may be combined or integrated into another system, or some features may be ignored or not executed. Another point is that the mutual coupling or direct coupling or communication connection shown or discussed may be an indirect coupling or communication connection through some interface, device or unit, which may be electrical or other forms.

The units described above as separate components may or may not be physically separated, and the components shown as units may or may not be physical units, that is, they may be located in one place or distributed over multiple network units. Some or all of the units may be selected according to actual needs to achieve the purpose of the solution of this embodiment.

In addition, each functional unit in each embodiment of the present application may be integrated into one processing unit, or each unit may exist physically separately, or two or more units may be integrated into one unit. The above integrated unit can be implemented in the form of hardware or in the form of software functional unit.

If the above-mentioned integrated unit is implemented in the form of a software functional unit and sold or used as an independent product, it can be stored in a computer-readable memory. Based on this understanding, the technical solution of the present application can essentially be embodied in the form of a software product, or in other words, the part that contributes to the prior art or all or part of the technical solution. The computer software product is stored in a memory and includes a number of instructions for enabling a computer device (which may be a personal computer, server or network device, etc.) to execute all or part of the steps of the above-mentioned methods in each embodiment of the present application. The aforementioned memory includes: U disk, read-only memory (ROM), random access memory (RAM), mobile hard disk, magnetic disk or optical disk and other media that can store program code.

The embodiments of the present application are described in detail above. Specific examples are used herein to illustrate the principles and implementation methods of the present application. The description of the above embodiments is only used to help understand the method and core idea of the present application. At the same time, for those skilled in the art, according to the idea of the present application, there will be changes in the specific implementation methods and application scope. In summary, the content of this specification should not be understood as limiting the present application.

## Claims

1. A smart device, **characterized in that**, the smart device comprises:
a casing body having an accommodating space; and
an accommodating part arranged in the accommodating space and having one or more accommodating cavities for accommodating one or more lighting fixtures respectively.

2. The smart device according to claim 1, **characterized in that**:
the smart device further comprises a control module including a control board used for controlling the one or more lighting fixtures.

3. The smart device according to claim 2, **characterized in that**:
the control module further includes a first communication module; and
when the one or more lighting fixtures are arranged in the accommodating part, the first communication module is configured to be in communication connection with the one or more lighting fixtures and the control board is used to control the one or more lighting fixtures through the first communication module.

4. The smart device according to claim 2, **characterized in that**, when the one or more lighting fixtures are arranged in the accommodating part, the control module is configured to be in communication connection with a target terminal so as to receive a set of target instructions sent by the target terminal, and the control module is used to configure lighting parameters of the one or more lighting fixtures based on the set of target instructions, so that the one or more lighting fixtures are operated with the target lighting parameters.

5. The smart device according to claim 1, **characterized in that**:
the smart device further comprises one or more pairs of first transmitter and second transmitter mounted at the accommodating part corresponding to the one or more accommodating cavities respectively; and
wherein for each accommodating cavity, a corresponding first transmitter is configured to transmit detection signals in a first direction and a corresponding second transmitter is configured to transmit detection signals in a second direction so as to detect whether the accommodating cavity is occupied by a lighting fixture, wherein the first direction and the second direction are different.

6. The smart device according to claim 5, **characterized in that**, the angle formed between the first direction and the second direction is 90°.

7. The smart device according to claim 5, **characterized in that**, the accommodating part further includes one or more pairs of first recess and second recess, and each pair of the first recess and the second recess are circumferentially arranged along an opening of a corresponding accommodating cavity and disposed at opposite sides of the accommodating cavity.

8. The smart device according to claim 5, **characterized in that**, the control module is further configured to transmit a target control signal for controlling the one or more pairs of first transmitter and second transmitter to transmit the detection signals.

9. A parameter configuration system, **characterized in that** the parameter configuration system comprises lighting fixtures and the smart device according to any one of claims 1 to 8, and the lighting fixtures are accommodated in the smart device.

10. The parameter configuration system according to claim 9, **characterized in that**:
the parameter configuration system further comprises a second communication module;
when the lighting fixtures are arranged in the smart device, the second communication module is configured to be in communication connection with a target terminal so as to receive a set of target instructions sent by the target terminal; and
the set of target instructions is used for configuring the lighting fixtures to work with the target lighting parameters.

11. The parameter configuration system according to claim 9, **characterized in that**:
the parameter configuration system further comprises a connector arranged with a third communication module;
when the lighting fixtures are accommodated in the smart device, the third communication module is configured to be in communication connection with a target terminal so as to receive a set of target instructions sent by the target terminal; and
the set of target instructions is used for configuring the lighting fixtures to work with the target lighting parameters.
